# FASCICULE DE BREVET EUROPEEN

(11) **EP 3 266 409 B1**
(45) Date de publication et mention de la délivrance du brevet: **07.08.2019**
(21) Numéro de dépôt: 17174002.0
(22) Date de dépôt: 01.06.2017
(51) Int. Cl.: A61C 9/00, A61C 13/00, A61C 13/10, A61C 13/271, A61C 13/267, A61C 13/34, C08G 18/42

(54) **PROTHÈSE DENTAIRE AMOVIBLE ET PROCÉDÉ DE FABRICATION DE CETTE PROTHÈSE DENTAIRE AMOVIBLE**
HERAUSNEHMBARE ZAHNPROTHESE UND HERSTELLUNGSVERFAHREN DIESER HERAUSNEHMBAREN ZAHNPROTHESE
REMOVABLE DENTAL PROSTHESIS AND METHOD FOR MANUFACTURING SAID REMOVABLE DENTAL PROSTHESIS

(30) Priorité: 08.07.2016 FR 1656607
(43) Date de publication de la demande: 10.01.2018
(73) Titulaire: TOUT DENTAIRE, 92500 Rueil Malmaison (FR)
(72) Inventeur: ATTALIN, Rémy, 92500 RUEIL MALMAISON (FR)
(74) Mandataire: Dejade & Biset

(56) Documents cités:
- FR-A3- 2 847 154
- US-A1- 2009 298 018
- US-A1- 2012 107 771

## Description

L'invention a trait au domaine des prothèses dentaires, et plus particulièrement à la fabrication d'une prothèse dentaire amovible.

Un individu édenté complètement ne peut plus mâcher les aliments. Un individu édenté partiellement mâche avec les dents lui restant, ce qui a tendance à user prématurément ces dernières.

Une des solutions, pour permettre à un individu édenté de mâcher correctement les aliments, est de lui proposer de porter une prothèse dentaire remplaçant les dents manquantes.

Les prothèses dentaires sont généralement fabriquées, sur-mesure, par un professionnel. Les prothèses dentaires peuvent être fabriquées par injection, à partir d'une empreinte de la mâchoire de l'individu édenté. Un tel mode de fabrication impose à l'individu de se déplacer chez un professionnel compétent, pour réaliser une prise d'empreinte, et impose d'attendre la fabrication de la prothèse dentaire. Cette attente peut être longue, et contraint l'individu à continuer à manger des aliments mous ou à continuer à user prématurément ses dents restantes.

Le document US 2004/0248065 décrit une prothèse dentaire apte à être adaptée à la mâchoire d'un individu édenté, sans l'intervention d'un professionnel. La prothèse dentaire comprend une base, de forme générale en U, configurée pour coopérer avec une gencive de l'individu. La base comprend des cavités dans lesquelles sont fixées des dents. La prothèse dentaire comprend également un matériau de garnissage, appliqué sur la base, du côté opposé aux dents et épousant la forme de la base. Afin d'adapter la prothèse dentaire à sa gencive, l'individu édenté plonge la prothèse dentaire dans de l'eau chaude. L'eau chaude permet de ramollir le matériau de garnissage. L'individu positionne ensuite la prothèse dans sa bouche, le matériau de garnissage plaqué contre sa gencive, puis serre la mâchoire ou appuie sur la prothèse dentaire avec les doigts jusqu'à refroidissement du matériau de garnissage. Le matériau de garnissage épouse ainsi parfaitement la forme de la gencive de l'individu, et permet le maintien de la prothèse sur la gencive.

Une telle prothèse dentaire permet effectivement, à un individu non qualifié, de l'adapter à sa mâchoire sans faire appel à un professionnel, en réduisant les délais puisque la base de la prothèse n'est pas fabriquée sur-mesure. Cependant, une prothèse telle que décrite dans le document US 2004/0248065 est fabriquée dans un matériau sensiblement rigide et donc cassable facilement. De plus, une telle prothèse n'est utilisable que par un individu ayant une de ses deux mâchoires entièrement édentée.

US2012/0107771 A1 divulgue un exemple de prothèse dentaire amovible comprenant une prothèse à placer sur une portion de mâchoire édentée. L'armature de la prothèse est en acrylique et munie de crochets pour l'accrocher à au moins un élément en saillie présent sur la mâchoire, et sur laquelle est soudée une dent artificielle à l'aide d'une fine couche d'acrylique placée entre la dent artificielle et l'armature.

Un premier objectif est de proposer un procédé de fabrication d'une prothèse dentaire, ce procédé pouvant être mis en oeuvre sans intervention d'un professionnel, notamment un professionnel de santé, la prothèse obtenue par le procédé permettant à un individu édenté de mâcher des aliments avec toute sa mâchoire.

Un deuxième objectif est de proposer un procédé de fabrication d'une prothèse dentaire configurée pour être adaptée à la mâchoire d'un individu, sans nécessiter l'intervention d'un professionnel.

Un troisième objectif est de proposer un procédé de fabrication d'une prothèse dentaire légère et flexible, améliorant le confort et réduisant le risque de casse.

Un quatrième objectif est de proposer un procédé de fabrication d'une prothèse dentaire, adaptable à une mâchoire partiellement édentée.

À cet effet, il est proposé, en premier lieu, un procédé de fabrication d'une prothèse dentaire, destinée à combler une zone d'une première mâchoire, la première mâchoire étant une reproduction à l'identique d'au moins une partie d'une mâchoire édentée d'un individu, la zone étant apte à recevoir au moins une dent, la première mâchoire intégrant un élément en saillie, le procédé comprenant :
- une première étape de dépôt d'une première portion d'un matériau appartenant à la famille des polycaprolactones sur la zone de la première mâchoire, de sorte que la première portion de matériau déposée puisse s'accrocher à l'élément en saillie, le matériau étant apte à conserver sa forme après dépôt ;
- une étape de fixation de la dent sur la première portion du matériau déposée.

Un tel procédé permet la fabrication d'une prothèse dentaire partielle amovible.

Ce procédé de fabrication permet, à un individu non formé, la fabrication d'une telle prothèse dentaire.

Diverses caractéristiques supplémentaires peuvent être prévues, seules ou en combinaison :
- la première portion de matériau déposée sur la zone de la première mâchoire comprend une base et un crochet , la base étant apte à couvrir la zone de la première mâchoire et le crochet étant apte à entourer au moins partiellement l'élément en saillie de la première mâchoire ;
- le procédé comprend, avant l'étape de fixation de la dent, une deuxième étape de dépôt d'une deuxième portion de matériau sur la première portion de matériau, la fixation de la dent étant réalisée sur la deuxième portion de matériau ;
- le procédé comprend, après l'étape de fixation de la dent, une étape de mise en contact de la première mâchoire avec une deuxième mâchoire complémentaire de la première mâchoire ;
- le procédé comprend, après la première étape de dépôt, une étape de durcissement du matériau ;
- le procédé comprend, avant la première étape de dépôt, une première étape de chauffage du matériau ;
- le procédé comprend, avant la première étape de dépôt, une première étape de teinte du matériau.

Il est proposé, en second lieu, une prothèse dentaire comprenant une première portion d'un matériau et au moins une dent, la prothèse dentaire étant fabriquée suivant le procédé tel que présenté ci-dessus.

Il est proposé, en troisième lieu, un kit comprenant :
- une prothèse dentaire telle que précédemment décrite ;
- un porte empreinte, une pâte à empreinte et du plâtre dentaire permettant de réaliser une première étape de moulage telle que présentée ci-dessus.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue schématique en perspective d'une prothèse dentaire amovible ;
- la figure 2 est une vue schématique en perspective d'une mâchoire édentée d'un individu ou d'une première mâchoire reproduisant à l'identique la mâchoire édentée ;
- la figure 3 est une vue schématique en perspective de la prothèse dentaire disposée sur une mâchoire édentée d'un individu ;
- la figure 4 est une vue schématique en perspective d'une première étape de dépôt d'une première portion d'un matériau sur une première mâchoire ;
- la figure 5 est une vue schématique en perspective d'une deuxième étape de dépôt d'une deuxième portion de matériau sur la première portion de matériau ;
- la figure 6 est une vue schématique en perspective d'une étape de fixation de dents sur la deuxième portion de matériau ;
- la figure 7 est une vue schématique en perspective d'une étape d'alignement des dents de la prothèse dentaire avec une deuxième mâchoire ;
- la figure 8 est une représentation schématique illustrant des étapes relatives à un mode de réalisation d'un procédé de fabrication d'une prothèse dentaire amovible.

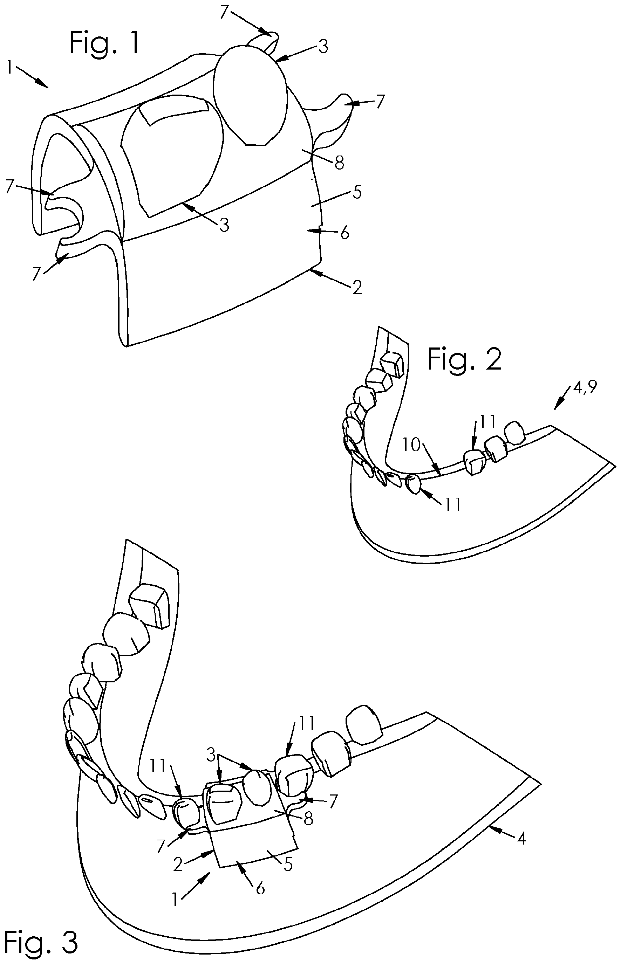

Sur la figure 1 est représenté une prothèse **1** dentaire comprenant un corps **2** et des dents **3** fixées sur le corps **2.**

Selon un mode de réalisation, la prothèse **1** dentaire comprend deux dents **3.** Selon des modes de réalisation non représentés, la prothèse **1** dentaire comprend une dent **3** ou plus de deux dents **3.**

Comme illustré sur la figure 3, la prothèse **1** est destinée, selon le mode de réalisation représenté, à combler une mâchoire **4** édentée d'un individu, la mâchoire **4** édentée étant représentée sur la figure 2.

La mâchoire **4** édentée est, ici, la mâchoire inférieure de l'individu. Cependant, selon des modes de réalisation non illustrés, la mâchoire **4** édentée est la mâchoire supérieure de l'individu, une mâchoire animale ou une mâchoire artificielle.

Le corps **2** de la prothèse **1** dentaire est fabriqué avec un matériau apte à conserver une forme définie.

Selon le mode de réalisation de l'invention, le matériau est thermoformable. Le matériau appartient à la famille des polycaprolactones.

Selon le mode de réalisation préféré, le matériau est sous forme de plaques. Selon des modes de réalisation différents, le matériau est sous forme de boules, de granules ou de tubes.

Le corps **2** de la prothèse **1** dentaire comprend une première portion **5.** La première portion **5** comprend une base **6** et quatre crochets **7.** Les crochets **7** sont aptes à entourer une dent de la mâchoire **4** édentée de l'individu.

Selon des modes de réalisation non représentés, la première portion **5** du corps **2** comprend un nombre différent de crochets **7.**

Le corps **2** comprend également une deuxième portion **8** solidaire de la première portion **5.** Les dents **3** sont fixées sur la deuxième portion **8.**

Selon un mode de réalisation non illustré, les dents **3** sont directement fixées sur la première portion **5.**

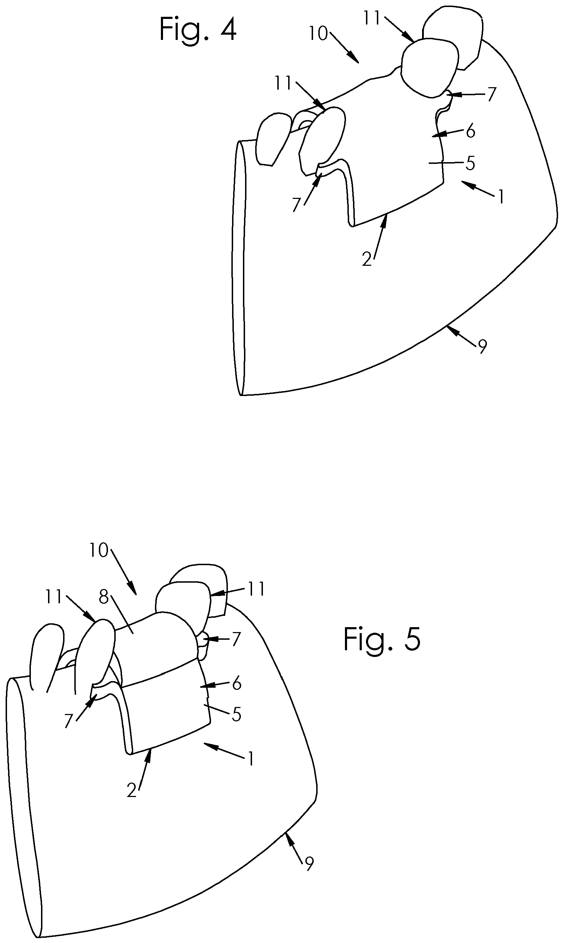

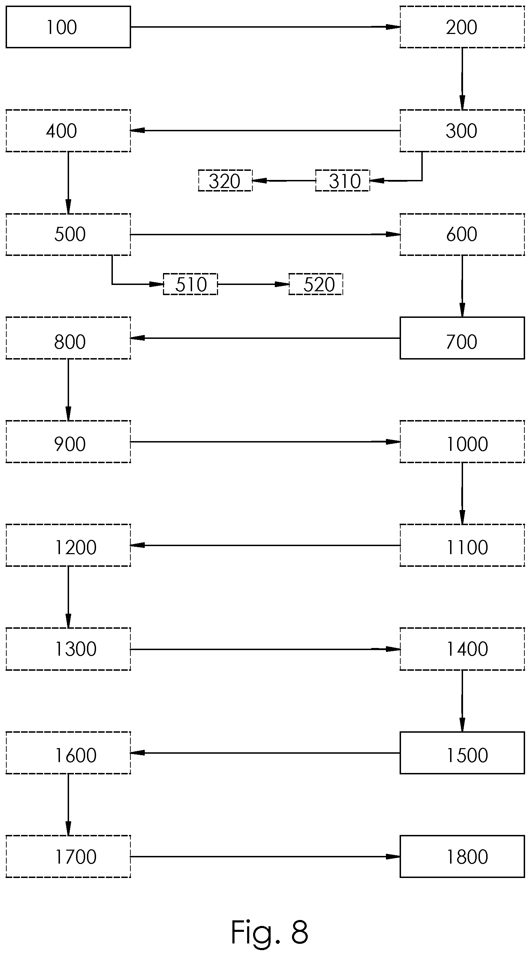

Un procédé de fabrication d'une telle prothèse **1** dentaire, dont les étapes sont décrites ci-dessous, est illustré sur les figures 4 à 7. Les étapes sont décrites et illustrées sur la figure 8 suivant leur ordre de réalisation, selon le mode de réalisation préféré.

Selon le mode de réalisation préféré, le procédé comprend une première étape **100** de chauffage de la première portion **5** de matériau. Le matériau, appartient avantageusement à la famille des polycaprolactones, est chauffé de sorte à ce qu'il devienne malléable. La température de chauffe est située entre soixante degrés Celsius et soixante-dix degrés Celsius. Le chauffage de la première portion **5** de matériau est, par exemple, réalisé à l'aide d'un sèche-cheveux.

Selon des modes de réalisations différents, le matériau est chauffé dans un four, ou encore par immersion dans de l'eau chaude.

Le procédé comprend une première étape **200** de teinte du matériau. Le matériau chaud est mélangé avec des colorants, de sorte à lui donner une couleur proche de la couleur d'une gencive de la mâchoire **4** édentée de l'individu. Les colorants utilisés sont avantageusement d'origine naturelle.

Selon des modes de réalisation différents, les colorants sont de type alimentaire. Le matériau peut également être non coloré pour garder sa teinte d'origine.

Le procédé comprend également une première étape **300** de moulage d'une première mâchoire **9,** illustrée sur la figure 2, d'au moins une partie de la mâchoire **4** édentée de l'individu.

La première étape **300** de moulage comprend une première phase **310** primaire de prise d'empreinte, réalisée à l'aide d'un porte empreinte et d'une pâte à empreinte. Le porte empreinte à une forme générale sensiblement en U et comprend une gouttière apte à recevoir la pâte à empreinte. Le porte empreinte et la pâte à empreinte sont ensuite insérés dans la bouche de l'individu, contre la mâchoire **4** édentée, de sorte que la mâchoire **4** édentée s'enfonce dans la pâte à empreinte. Une fois la pâte à empreinte durcie, le porte empreinte et la pâte à empreinte sont retirés de la bouche de l'individu.

La première étape **300** de moulage comprend également une deuxième phase **320** primaire de coulage de plâtre dentaire dans la pâte à empreinte, formant un négatif de la mâchoire **4** édentée de l'individu. Une fois le plâtre dentaire durci, le porte empreinte et la pâte à empreinte sont désolidarisés du plâtre dentaire. Le plâtre dentaire forme alors la première mâchoire **9,** cette dernière étant une reproduction à l'identique de la mâchoire **4** édentée de l'individu.

La première mâchoire **9** comprend alors une zone **10** apte à recevoir au moins une dent **3.** La première mâchoire **9** intègre également deux éléments **11** en saillie.

Selon le mode de réalisation représenté, l'élément **11** en saillie est une dent naturelle. Selon un mode de réalisation différent, la première mâchoire **9** comprend un nombre différent d'éléments **11** en saillie. Les éléments **11** en saillie sont, par exemple, un appareil dentaire, un bridge, une dent sur pivot ou encore une couronne.

Le procédé comprend une étape **400** de délimitation de la zone **10** de la première mâchoire **9.** L'étape **400** de délimitation consiste à délimiter, par exemple à l'aide d'un stylo, sur la première mâchoire, le périmètre la zone **10** de première mâchoire **9.**

Le procédé comprend également une deuxième étape **500** de moulage d'une deuxième mâchoire **12** d'au moins une partie d'une mâchoire de l'individu opposée à la mâchoire **4** édentée et complémentaire de celle-ci.

La mâchoire opposée est, ici, la mâchoire supérieure de l'individu. Cependant, selon des modes de réalisation non illustrés, la mâchoire opposée est la mâchoire inférieure de l'individu, une mâchoire animale ou une mâchoire artificielle.

La deuxième étape **500** de moulage comprend une première phase **510** secondaire de prise d'empreinte, réalisée à l'aide d'un porte empreinte et d'une pâte à empreinte. Le porte empreinte à une forme générale sensiblement en U et comprend une gouttière apte à recevoir la pâte à empreinte. Le porte empreinte et la pâte à empreinte sont ensuite insérés dans la bouche de l'individu, contre la mâchoire opposée, de sorte que la mâchoire opposée s'enfonce dans la pâte à empreinte. Une fois la pâte à empreinte durcie, le porte empreinte et la pâte à empreinte sont retirés de la bouche de l'individu.

La deuxième étape **500** de moulage comprend également une deuxième phase **520** secondaire de coulage de plâtre dentaire dans la pâte à empreinte, qui forme un négatif de la mâchoire opposée de l'individu. Une fois le plâtre dentaire durci, le porte empreinte et la pâte à empreinte sont désolidarisés du plâtre dentaire. Le plâtre dentaire forme alors la deuxième mâchoire **12,** cette dernière étant une reproduction à l'identique de la mâchoire opposée à la mâchoire **4** édentée de l'individu.

Selon un mode de réalisation différent, la première étape **300** de moulage et l'étape **400** de délimitation sont réalisées avant la première étape **100** de chauffage. La deuxième étape **500** de moulage est réalisée avant la première étape **300** de moulage.

Selon le mode de réalisation préféré, le procédé comprend une deuxième étape **600** de chauffage de la première portion **5** de matériau. Le matériau, qui appartient à la famille des polycaprolactones, est chauffé, de sorte à ce qu'il devienne malléable. La température de chauffe est située entre soixante degrés Celsius et soixante-dix degrés Celsius. Le chauffage de la première portion **5** de matériau est, par exemple, réalisé à l'aide d'un sèche-cheveux.

Selon des modes de réalisations différents, le matériau est chauffé dans un four ou encore par immersion dans de l'eau chaude.

Si la première étape **300** de moulage, l'étape **400** de délimitation et la deuxième étape **500** de moulage sont réalisées avant la première étape **100** de chauffage et que la première portion **5** de matériau est suffisamment malléable après la première étape **200** de teinte, la deuxième étape **600** de chauffage n'est pas nécessaire.

Si la première étape **200** de teinte n'est pas réalisée, la deuxième étape **600** de chauffage n'est pas nécessaire.

Comme illustré sur la figure 4, le procédé comprend une première étape **700** de dépôt de la première portion **5** de matériau sur la zone **10** de la première mâchoire **9.** La première portion **5** est déposée de sorte que la base **6** ne dépasse pas le périmètre de la zone **10** délimité dans l'étape **400** de délimitation et que les crochets **7** entourent les éléments **11** en saillie de la première mâchoire **9.**

Selon un mode de réalisation non représenté, la première étape **300** de moulage et l'étape **400** de délimitation ainsi que la deuxième étape **500** de moulage ne sont pas réalisées et la première portion **5** de matériau est déposée sur la mâchoire **4** édentée de l'individu, les crochets **7** entourant une dent de la mâchoire **4** édentée.

Le procédé comprend une première étape **800** de durcissement de la première portion **5** de matériau.

Selon le mode de réalisation préféré, la première portion **5** de matériau est plongée dans de l'eau à température ambiante, refroidissant le matériau et provoquant son durcissement. Selon un mode de réalisation différent, la première portion **5** de matériau est refroidie par l'air ambiant provoquant son durcissement.

Le procédé comprend une étape **900** de suppression des bavures de la première portion **5** de matériau. Les bavures sont supprimées à l'aide d'un outil tranchant.

Le procédé comprend une étape **1000** de repositionnement de la première portion **5** de matériau sur la première mâchoire **9.**

Selon un mode de réalisation non représenté, la première étape **300** de moulage et l'étape **400** de délimitation ainsi que la deuxième étape **500** de moulage ne sont pas réalisées, et la première portion **5** de matériau est repositionnée sur la mâchoire **4** édentée de l'individu.

Le procédé comprend une troisième étape **1100** de chauffage de la deuxième portion **8** de matériau. Le matériau, qui appartient à la famille des polycaprolactones, est chauffé de sorte à ce qu'il devienne malléable. La température de chauffe est située entre soixante degrés Celsius et soixante-dix degrés Celsius. Le chauffage de la deuxième portion **8** de matériau est, par exemple, réalisé à l'aide d'un sèche-cheveux.

Selon des modes de réalisations différents, le matériau est chauffé dans un four ou encore par immersion dans de l'eau chaude.

Selon un mode de réalisation différent, le matériau chauffé lors de la troisième étape **1100** de chauffage est un excédent de matériau provenant de la première étape **700** de dépôt de la première portion **5** de matériau et de l'étape **900** de suppression des bavures.

Le procédé comprend une deuxième étape **1200** de teinte du matériau. Le matériau chaud est mélangé avec des colorants, de sorte à lui donner une couleur proche de la couleur d'une gencive de la mâchoire **4** édentée de l'individu. Les colorants utilisés sont avantageusement d'origine naturelle.

Selon des modes de réalisation différents, les colorants sont de type alimentaire. Le matériau peut également être non coloré pour garder sa teinte d'origine.

Selon le mode de réalisation préféré, le procédé comprend une quatrième étape **1300** de chauffage de la deuxième portion **8** de matériau. Le matériau, qui appartient à la famille des polycaprolactones, est chauffé, de sorte à ce qu'il devienne malléable. La température de chauffe est située entre soixante degrés Celsius et soixante-dix degrés Celsius. Le chauffage de la deuxième portion **8** de matériau est, par exemple, réalisé à l'aide d'un sèche-cheveux.

Selon des modes de réalisations différents, le matériau est chauffé dans un four ou encore par immersion dans de l'eau chaude.

Si la deuxième portion **8** de matériau est suffisamment malléable après la deuxième étape **1200** de teinte ou si la deuxième étape **1200** de teinte n'est pas réalisée, la quatrième étape **1300** de chauffage n'est pas nécessaire.

Comme illustré sur la figure 5, le procédé comprend également une deuxième étape **1400** de dépôt de la deuxième portion **8** de matériau sur la première portion **5.** La deuxième portion **8** est déposée sous forme d'un cordon sur la première portion **5.**

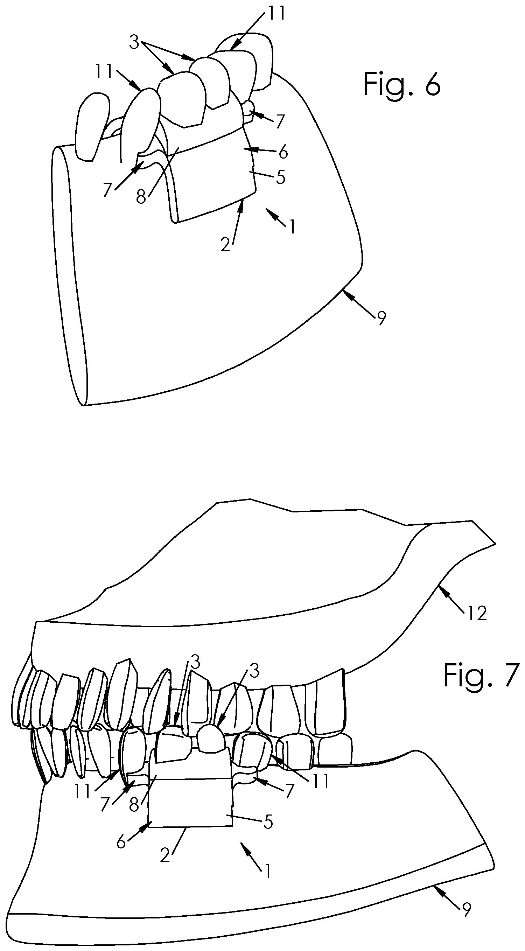

Le procédé comprend une étape **1500** de fixation des dents **3** sur la deuxième portion **8,** représentée sur la figure 6. Les dents **3** sont insérées dans la deuxième portion **8** de matériau, de sorte à combler la zone **10** de la première mâchoire **9.**

Selon un mode de réalisation différent, une unique dent **3** est fixée lors de l'étape **1500** de fixation. Selon un mode de réalisation différent, la deuxième étape **1400** de dépôt de la deuxième portion **8** de matériau n'est pas réalisée et les dents **3** sont fixées dans la première portion **5** de matériau.

Selon le mode de réalisation préféré, les dents **3** sont préfabriquées. Selon un mode de réalisation différent, les dents **3** sont fabriquées sur-mesure pendant le procédé de fabrication de la prothèse **1** dentaire.

Le procédé comprend une étape **1600** d'alignement des dents **3** avec la deuxième mâchoire **12,** illustré sur la figure **7****.** La deuxième mâchoire **12** est posée contre la première mâchoire **9,** sur laquelle est positionnée la prothèse **1** dentaire, de sorte que les dents **3** de la prothèse **1** dentaire coopèrent avec des dents de la deuxième mâchoire **12.**

Selon un mode de réalisation différent, la prothèse **1** dentaire est positionnée sur la mâchoire **4** édentée. L'étape **1600** d'alignement des dents **3** est réalisée avec la mâchoire opposée à la mâchoire **4** édentée de sorte que les dents **3** de la prothèse **1** dentaire coopèrent avec des dents de la mâchoire opposée à la mâchoire **4** édentée.

Le procédé comprend une étape **1700** de lissage des aspérités de la première portion **5** et de la deuxième portion **8** du matériau.

Le procédé comprend une deuxième étape **1800** de durcissement de la prothèse **1** dentaire.

Selon le mode de réalisation préféré, la prothèse **1** dentaire est plongée dans de l'eau à température ambiante, refroidissant le matériau et provoquant son durcissement. Selon un mode de réalisation différent, la prothèse **1** dentaire est refroidie par l'air ambiant provoquant son durcissement.

Un tel procédé permet la fabrication d'une prothèse **1** dentaire partielle amovible fabriquée avec des matériaux biocompatibles.

Ce procédé de fabrication permet, à un individu non formé, la fabrication d'une telle prothèse **1** dentaire amovible pour une mâchoire **4** édentée.

Le procédé est réalisable à partir d'un kit, comprenant le matériau, au moins une dent **3,** le porte empreinte, la pâte à empreinte et le plâtre dentaire.

## Revendications

1. Procédé de fabrication d'une prothèse (**1**) dentaire, destinée à combler une zone (**10**) d'une première mâchoire (**9**), la première mâchoire (**9**) étant une reproduction à l'identique d'au moins une partie d'une mâchoire (**4**) édentée d'un individu, la zone (**10**) étant apte à recevoir au moins une dent (**3**), la première mâchoire (**9**) intégrant un élément (**11**) en saillie, le procédé comprenant :
- une première étape (**700**) de dépôt d'une première portion (**5**) d'un appartenant à la famille des polycaprolactones sur la zone (**10**) de la première mâchoire (**9**), de sorte que la première portion (**5**) déposée puisse s'accrocher à l'élément (**11**) en saillie, ledit matériau étant apte à conserver sa forme après dépôt ;
- une deuxième étape **(1400)** de dépôt d'une deuxième portion (**8**) dudit matériau sur la première portion (**5**) ;
- une étape **(1500)** de fixation de la dent (**3**) sur la deuxième portion (**8**) déposée.

2. Procédé selon la revendication précédente, **caractérisé en ce que** la première portion (**5**) déposée sur la zone (**10**) de la première mâchoire (**9**) comprend une base (**6**) et un crochet (**7**), la base (**6**) étant apte à couvrir la zone (**10**) de la première mâchoire (**9**) et le crochet (**7**) étant apte à entourer au moins partiellement l'élément (**11**) en saillie de la première mâchoire (**9**).

3. Procédé selon l'une quelconque des revendications précédentes, **caractérisé en ce qu'**il comprend, après l'étape (**1500**) de fixation de la dent, une étape de mise en contact de la première mâchoire (**9**) avec une deuxième mâchoire (**12**) complémentaire de la première mâchoire (**9**).

4. Procédé selon l'une quelconque des revendications précédentes, **caractérisé en ce qu'**il comprend, après la deuxième étape **(1400)** de dépôt, une étape **(1800)** de durcissement dudit matériau.

5. Procédé selon l'une quelconque des revendications précédentes, **caractérisé en ce qu'**il comprend, avant la deuxième étape (**1400**) de dépôt, une première étape (**100**) de chauffage dudit matériau.

6. Procédé selon l'une quelconque des revendications précédentes, **caractérisé en ce qu'**il comprend, avant la deuxième étape (**1400**) de dépôt, une première étape (**200**) de teinte dudit matériau.

7. Prothèse (**1**) dentaire comprenant une première portion (**5**) d'un matériau, une deuxième portion (**8**) dudit matériau et au moins une dent (**3**), la prothèse (**1**) dentaire étant fabriquée suivant le procédé selon l'une quelconque des revendications précédentes.

8. Kit comprenant :
- une prothèse (**1**) dentaire selon la revendication précédente ;
- un porte empreinte, une pâte à empreinte et du plâtre dentaire permettant de réaliser une première étape (**300**) de moulage.

## Patentansprüche

1. Herstellungsverfahren einer Zahnprothese (**1**), die zum Füllen eines Bereichs (**10**) eines ersten Kiefers (**9**) bestimmt ist, wobei der erste Kiefer (**9**) eine identische Wiedergabe wenigstens eines Teils eines zahnlosen Kiefers (**4**) einer Person ist, wobei der Bereich (**10**) geeignet ist, wenigstens einen Zahn (**3**) aufzunehmen, wobei der erste Kiefer (**9**) ein hervorstehendes Element (**11**) beinhaltet, wobei das Verfahren umfasst:
- einen ersten Schritt (**700**) zum Aufbringen eines ersten Abschnitts (**5**) eines zur Familie der Polycaprolactone gehörenden in dem Bereich (**10**) des ersten Kiefers (**9**) derart, dass der erste aufgebrachte Abschnitt (5) an dem hervorstehenden Element (**11**) befestigt sein kann, wobei das genannte Material geeignet ist, seine Form nach dem Aufbringen beizubehalten;
- einen zweiten Schritt **(1400)** zum Aufbringen eines zweiten Abschnitts (**8**) des genannten Materials auf dem ersten Abschnitt (**5**);
- einen Schritt (**1500**) zur Befestigung des Zahns (**3**) auf dem aufgebrachten zweiten Abschnitt (**9**).

2. Verfahren gemäß dem voranstehenden Anspruch, **dadurch gekennzeichnet, dass** der erste Abschnitt (**5**), der auf dem Bereich (**10**) des ersten Kiefers (**9**) aufgebracht ist, eine Basis (**6**) und einen Haken (**7**) umfasst, wobei die Basis (**6**) geeignet ist, den Bereich (**10**) des ersten Kiefers (**9**) abzudecken und der Haken geeignet ist, das hervorstehende Element (**11**) des ersten Kiefers (**9**) wenigstens teilweise zu umgeben.

3. Verfahren gemäß irgendeinem der voranstehenden Ansprüche, **dadurch gekennzeichnet, dass** es nach dem Schritt (**1500**) zur Befestigung des Zahns einen Schritt zum Kontaktieren des ersten Kiefers (**9**) mit einem zweiten Kiefer (**12**) umfasst, der komplementär zum ersten Kiefer (**9**) ist.

4. Verfahren gemäß irgendeinem der voranstehenden Ansprüche, **dadurch gekennzeichnet, dass** es nach dem zweiten Schritt (**1400**) zum Aufbringen einen Schritt **(1800)** zum Aushärten des genannten Materials umfasst.

5. Verfahren gemäß irgendeinem der voranstehenden Ansprüche, **dadurch gekennzeichnet, dass** es vor dem zweiten Schritt (**1400**) zum Aufbringen einen ersten Schritt (**100**) zum Erhitzen des genannten Materials umfasst.

6. Verfahren gemäß irgendeinem der voranstehenden Ansprüche, **dadurch gekennzeichnet, dass** es vor dem zweiten Schritt (**1400**) zum Aufbringen einen ersten Schritt (**200**) zum Einfärben des genannten Materials umfasst.

7. Zahnprothese (**1**), umfassend einen ersten Abschnitt (**5**) eines Materials, einen zweiten Abschnitt (**8**) des genannten Materials und wenigstens einen Zahn (**3**), wobei die Zahnprothese (**1**) gemäß dem Verfahren gemäß irgendeinem der voranstehenden Ansprüche hergestellt ist.

8. Kit, umfassend:
eine Zahnprothese (**1**) gemäß dem voranstehenden Anspruch;
einen Abdruckträger, eine Abdruckpaste und Zahngips, der das Herstellen eines ersten Schritts (**300**) zum Abformen zulässt.

## Claims

1. A method for manufacturing a dental prosthesis (1), for filling a zone (10) of a first jaw (9), the first jaw (9) being an identical reproduction of at least one part of a toothless jaw (4) of an individual, the zone (10) being able to receive at least one tooth (3), the first jaw (9) integrating a projecting element (11), the method comprising:
- a first step (700) of depositing a first portion (5) of a belonging to the polycaprolactone family onto the zone (10) of the first jaw (9), such that the first portion (5) deposited is able to be secured to the projecting element (11), said material being able to maintain its shape after deposition;
- a second step (1400) of depositing a second portion (8) of said material onto the first portion (5);
- a step (1500) of attaching the tooth (3) to the second portion (8) deposited.

2. The method according to the preceding claim, **characterised in that** the first portion (5) deposited onto the zone (10) of the first jaw (9) comprises a base (6) and a hook (7), the base (6) being able to cover the zone (10) of the first jaw (9) and the hook (7) being able to surround at least partially the projecting element (11) of the first jaw (9).

3. The method according to any of the preceding claims, **characterised in that** it comprises, after the step (1500) of attaching the tooth, a step of contacting the first jaw (9) with a second jaw (12) complementary to the first jaw (9).

4. The method according to any of the preceding claims, **characterised in that** it comprises, after the second deposition step (1400), a step (1800) of curing said material.

5. The method according to any of the preceding claims, **characterised in that** it comprises, before the second deposition step (1400), a first step (100) of heating said material.

6. The method according to any of the preceding claims, **characterised in that** it comprises, before the second deposition step (1400), a first step (200) of dyeing said material.

7. A dental prosthesis (1) comprising a first portion (5) of a material, a second portion (8) of said material and at least one tooth (3), the dental prosthesis (1) being manufactured according to the method in accordance with any of the preceding claims.

8. A kit comprising:
- a dental prosthesis (1) according to the preceding claim;
- an impression tray, an impression paste and dental plaster enabling a first moulding step (300) to be carried out.
